# EUROPEAN PATENT SPECIFICATION

(11) **EP 2 445 165 B1**
(45) Date of publication and mention of the grant of the patent: **18.10.2017**
(21) Application number: 10788951.1
(22) Date of filing: 18.06.2010
(51) Int. Cl.: H04L 29/06

(54) **METHOD, SYSTEM AND DEVICE FOR IMPLEMENTING MACHINE-TO-MACHINE SERVICE**
VERFAHREN, SYSTEM UND VORRICHTUNG ZUR IMPLEMENTIERUNG EINES MASCHINE-ZU-MASCHINE-DIENSTES
PROCÉDÉ, SYSTÈME ET DISPOSITIF DE MISE EN OEUVRE DE SERVICE DE MACHINE À MACHINE

(30) Priority: 19.06.2009 CN 200910150636
(43) Date of publication of application: 25.04.2012
(60) Divisional application: 17190744.7
(73) Proprietor: Huawei Technologies Co., Ltd., Longgang District Shenzhen, Guangdong 518129 (CN)
(72) Inventor: HAN, Guanglin, Shenzhen Guangdong 518129 (CN); ZHANG, Peng, Shenzhen Guangdong 518129 (CN)
(74) Representative: Isarpatent
(86) International application number: PCT/CN2010/074035
(87) International publication number: WO 2010/145555

(56) References cited:
- EP-A2- 0 637 160
- CN-A- 101 127 726
- CN-A- 101 345 999
- CN-A- 101 360 011

## Description

### FIELD OF THE INVENTION

The present invention relates to the field of network technologies, and in particular, to a method, a system, and an apparatus for implementing a machine-to-machine service.

### BACKGROUND OF THE INVENTION

With the development of science and technology, more and more devices require communication and networking, and accordingly, a Machine-to-Machine (Machine-to-Machine, M2M) concept is produced. In addition, M2M may be understood to be a variety of concepts, such as Man-to-Machine (Man-to-Machine), Machine-to-Man (Machine-to-Man), Mobile-to-Machine (Mobile-to-Machine) and Machine-to-Mobile (Machine-to-Mobile). In summary, the main purpose of M2M is to provide a simple way to establish a radio connection between a system, a remote device, and an individual person for real-time data of devices. Moreover, an M2M technology integrates data collection, remote monitoring, communication, and information technology, in order to enable more and more devices to have communication and networking capabilities, so that everything can be realized on a network.

Currently, the following methods are mainly used to implement an M2M service:
First method: If a networked device in an M2M service entity actively initiates an M2M service, and initiates uplink signaling to an M2M server, the networked device first needs to establish a connection with the M2M server: The networked device first establishes a connection with a base station, and through the established connection, the networked device establishes a bearer of a communication system through non access stratum signaling; subsequently, the networked device sends M2M signaling to the base station through the bearer, and the base station sends the M2M signaling to a core network through a core network bearer; finally, the core network sends the M2M signaling to the M2M server.
Second method: If an M2M server in an M2M service entity actively initiates an M2M service, and initiates downlink signaling to a networked device, the M2M server first needs to establish a connection with the networked device: The M2M server sends downlink M2M signaling to a core network; the core network sends a paging for the networked device to a base station of an access network according to the received M2M signaling; the base station of the access network initiates a paging to the networked device; the paged networked device establishes a connection with the base station, and through the established connection, the networked device establishes a bearer of a communication system through non access stratum signaling; subsequently, through the bearer, a core network device sends the M2M signaling to the base station, and the base station sends the M2M signaling to the networked device.

EP 0 637 160 A2, published on February 1,1995, discloses a method of interactively processing a telephone call in a distributed system comprising at least two computer workstations connected together by a communications link. Especially, a process is disclosed that a remote resource can be utilised including following steps: a channel processor send a request to a custom server for resource, the custom server sends a datagram to the resource controller, where the datagram identifies the resource required by the custom server, the resource controller checks its table of available resources and returns a message to the custom server containing information identifying the allocated server, and the custom server forwards the location information onto the resource processor, allowing the resource processor to communicate with the server.

The foregoing methods have at least the following problems: When the M2M server and the networked device initiate communication through the M2M signaling, the processing on the M2M signaling by the communication network increases the load of the system, thus affecting the performance of other communication services, and causing network service quality to decline.

### SUMMARY OF THE INVENTION

Embodiments of the present invention provide a method as in claim 1 and an apparatus as in claim 4 for implementing an M2M service, which enable reasonable scheduling of system resources of a connection network and effectively avoid the problem of affecting other communication services when implementing the M2M service.

To solve the foregoing technical problem, an embodiment of the present invention provides a method for implementing an M2M service, where the method includes:
receiving an M2M service request from a source M2M service entity(201), wherein the M2M service request comprises information about an access mode;
judging whether it is allowed to perform an M2M service indicated by the M2M service request according to resource scheduling information(202), wherein the resource scheduling information comprises different priorities set for different M2M service access modes; and
sending the M2M service request to a target M2M service entity according to target address information carried in the M2M service request, when judging that it is allowed to perform the M2M service indicated by the M2M service request according to the resource scheduling information(203).

An embodiment of the present invention provides a connection network for implementing an M2M service, where the connection network includes:
a receiving unit, a judging unit, and a sending unit, where:
   the receiving unit(401) is configured to receive an M2M service request from a source M2M service entity, wherein the M2M service request comprises information about an access mode;
   the judging unit(402) is configured to judge whether it is allowed to perform an M2M service indicated by the M2M service request according to resource scheduling information, wherein the resource scheduling information comprises different priorities set for different M2M service access modes; and
   the sending unit(403) is configured to send the M2M service request to a target M2M service entity when the judging unit judges that it is allowed to perform the M2M service indicated by the M2M service request according to the resource scheduling information.

Compared with the prior art, the technical solutions according to the embodiments of the present invention has the following advantages:
When an M2M service entity performs an M2M service, the connection network on which the M2M service entity is based judges, according to a received access request and pre-stored judgment criteria, whether this request is allowed, and the M2M service can be performed only when a judgment result indicates that this request is allowed, thus effectively avoiding performing the M2M service in the case that a network load is heavy, so that the normal performance of other communication services is not affected when the M2M service is being performed, and service quality of the M2M service is improved accordingly.

### BRIEF DESCRIPTION OF THE DRAWINGS

To make the technical solutions of the embodiments of the present invention or the prior art clearer, accompanying drawings needed to be used in the description of the embodiments or the prior art are briefly described in the following. Evidently, the accompanying drawings in the following description are only some embodiments of the present invention, and those of ordinary skill in the art may further obtain other drawings according to these accompanying drawings without creative efforts.
FIG. 1 is a flowchart of a method for implementing an M2M service according to an embodiment of the present invention;
FIG. 2 is a flowchart of another method for implementing an M2M service according to an embodiment of the present invention;
FIG. 3 is a structural diagram of a system for implementing an M2M service according to an embodiment of the present invention;
FIG. 4 is a structural diagram of a connection network for implementing an M2M service according to an embodiment of the present invention;
FIG. 5 is a flowchart of a method for implementing an M2M service based on a mobile communication network according to an embodiment of the present invention;
FIG. 6 is a flowchart of another method for implementing an M2M service based on a mobile communication network according to an embodiment of the present invention; and
FIG. 7 is a flowchart of a third method for implementing an M2M service based on a mobile communication network according to an embodiment of the present invention.

### DETAILED DESCRIPTION OF THE EMBODIMENTS

The technical solutions of the embodiments of the present invention are described clearly and completely below with reference to the accompanying drawings in the embodiments of the present invention. Obviously, the described embodiments are only part of rather than all of the embodiments of the present invention. All other embodiments that those of ordinary skill in the art obtain without creative efforts based on the embodiments of the present invention also fall within the scope of the present invention.

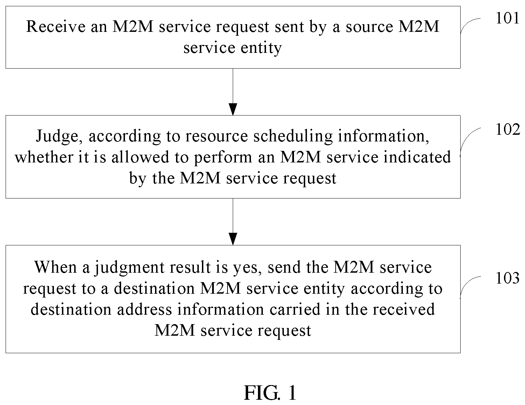

An embodiment of the present invention provides a method for implementing an M2M service, where specific steps are as shown in FIG. 1:
Step 101: Receive an M2M service request sent by a source M2M service entity.
Step 102: Judge, according to resource scheduling information, whether it is allowed to perform an M2M service indicated by the M2M service request.
Step 103: When a judgment result is yes, send the M2M service request to a target M2M service entity according to target address information carried in the received M2M service request.

In the method for implementing an M2M service according to the embodiment of the present invention, whether the M2M service may be performed at this time may be judged according to certain judgment criteria after the service request initiated by the source M2M entity is received, and the M2M service can be performed only when the judgment result is yes, thus effectively avoiding performing the M2M service in the case that a network load is heavy, so that the normal performance of other communication services is not affected when the M2M service is being performed, and service quality of the M2M service is improved accordingly.

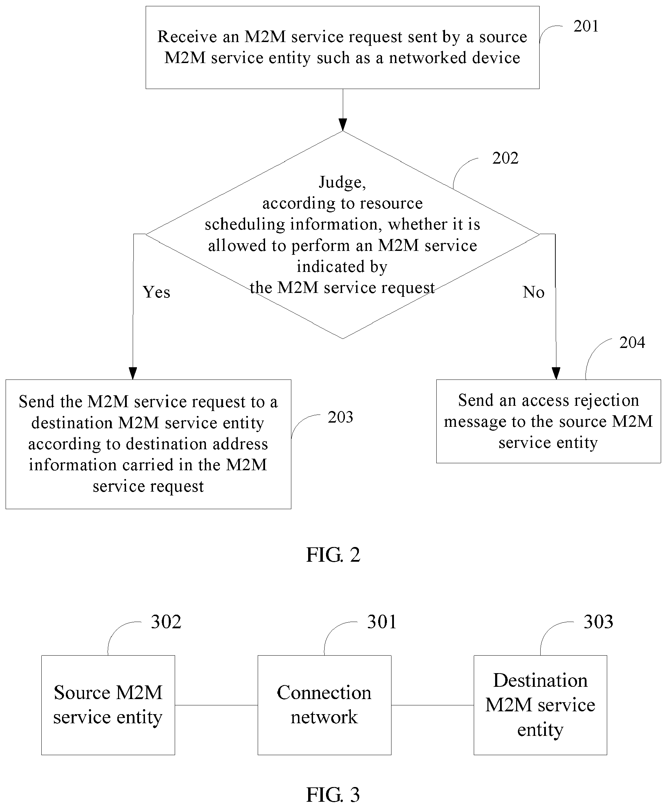

An embodiment of the present invention also provides another method for implementing an M2M service, where specific steps are as shown in FIG. 2:
Step 201: Receive an M2M service request sent by a source M2M service entity.
   In step 201, a connection network receives the M2M service request sent by the source M2M service entity, where the source M2M service entity may be a networked device with an M2M function or an M2M server, which crucially depends on who, the networked device or the M2M server, is the initiator of the M2M service request.
Step 202: Judge, according to resource scheduling information, whether it is allowed to perform an M2M service indicated by the M2M service request.
   In step 202, the resource scheduling information may be information about a current network load. For example, the connection network may obtain the information about the current network load. If the information shows that the current network load is small and that the M2M service may be performed, the connection network may directly perform subsequent operations for implementing the M2M service. In addition, the resource scheduling information may also be an access scheduling policy which is pre-configured in an access network. For example, different priorities may be set for different M2M service types or for different M2M service access modes. In this way, when judging whether it is allowed to perform the M2M service, it is necessary to check identification information carried in the received M2M service request first, such as information about the service type and information about the access mode, and according to the access scheduling policy, check whether the M2M service indicated by the M2M service request has a higher priority in order to judge whether the M2M service may be performed. In addition, the resource scheduling information may also be subscription information of the M2M service entity, where the subscription information is obtained through pre-subscription of the M2M service entity and the connection network, and may be pre-configured in the connection network. For example, the subscription information may include different types of information such as a type of the M2M service entity, a type of the M2M service, a group to which the M2M service entity belongs, and information about the frequency that the M2M service entity is allowed to access. In this way, when judging whether it is allowed to perform the M2M service, it is necessary to check identification information carried in the received M2M service request first, such as information about the service type and relevant information about the source M2M service entity, and according to the subscription information of the M2M service entity, check whether the M2M service indicated by the M2M service request may be performed currently. When the foregoing judgment is performed, depending on specific conditions of the connection network, the judgment may be performed according to only a certain judgment criterion, or multiple judgment criteria may be integrated for judgment. After the foregoing judgment is completed, if the judgment result is yes, step 203 is executed; if the judgment result is no, step 204 is executed.
Step 203: Send the M2M service request to a target M2M service entity according to target address information carried in the M2M service request.
   In step 203, if the judgment result indicates that the M2M service indicated by the M2M request message may be performed at this time, the connection network needs to send the M2M service request to the target M2M service entity. For example, if the source M2M service entity is a networked device, the connection network needs to send the received M2M service request to a corresponding M2M server; and if the source M2M service entity is an M2M server, the connection network needs to send the received M2M service request to a corresponding networked device, for performing the M2M service.
Step 204: Send an access rejection message to the source M2M service entity.

In step 204, when the judgment result indicates that the M2M service indicated by the M2M service request cannot be performed at this time, the connection network needs to send an access rejection message to the source M2M service entity to notify the source M2M service entity that the M2M service cannot be performed temporarily. In addition, the access rejection message may also include an access rejection reason, where the access rejection reason is used to notify the source M2M service entity of current network conditions; accordingly, the rejection message may also include time to initiate a next M2M service request, where the time to initiate the next M2M service request is used for reference by the source M2M service entity for when to initiate the next M2M service request.

In the method for implementing the M2M service according to the embodiment of the present invention, the connection network may judge, according to certain judgment criteria, after receiving the service request sent by the source M2M entity, whether the M2M service may be performed at this time, and the M2M service can be performed only when the judgment result is yes, thus effectively avoiding performing the M2M service in the case that a network load is heavy, so that the normal performance of other communication services is not affected when the M2M service is being performed, and service quality of the M2M service is improved accordingly.

In addition, in the method for implementing the M2M service according to the embodiment of the present invention, when the M2M service cannot be performed, the connection network sends the access rejection message to the source M2M service entity, and if the rejection message includes information such as an access rejection reason and time to initiate a next M2M service request, the method may also effectively avoid re-initiating the M2M service request by the source M2M service entity during an inappropriate period of time, thus improving efficiency for performing the M2M service.

Accordingly, an embodiment of the present invention also provides a system for implementing an M2M service, as shown in FIG. 3, where the system includes: a connection network 301, and a source M2M service entity 302 and a target M2M service entity 303 that are connected to the connection network 301 in a communicable manner.

The connection network 301 is configured to receive an M2M service request sent by the source M2M service entity; and
judge, according to resource scheduling information, whether it is allowed to perform an M2M service indicated by the received M2M service request; and
when a judgment result is yes, send the M2M service request to the target M2M service entity according to target address information carried in the received M2M service request.

The source M2M service entity 302 is configured to send the M2M service request to the connection network 301.

The target M2M service entity 303 is configured to receive the M2M service request sent by the connection network 301.

The M2M service may be implemented through the foregoing system by using the following manner:
First, the source M2M service entity 302 sends the M2M service request to the connection network 301, where the source M2M service entity 302 may be a networked device or an M2M server; after receiving the M2M service request, the connection network 301 judges, according to preset resource scheduling information, whether it is allowed to perform the M2M service indicated by the M2M service request, where the resource scheduling information may include information such as information about a current network load, an access scheduling policy, or subscription information of the M2M service entity. If the judgment result is yes, the received M2M service request is sent to the target M2M service entity 303. Here, if the source M2M service entity 302 is a networked device, the target M2M service entity 303 is an M2M server, and if the source M2M service entity 302 is an M2M server, the target M2M service entity 303 is a networked device. If the judgment result is no, an access rejection message is sent to the source M2M service entity.

In the system for implementing the M2M service according to the embodiment of the present invention, the connection network may judge, according to pre-stored judgment criteria, after receiving the service request initiated by the M2M entity, whether the M2M service may be performed at this time, and the M2M service can be performed only when the judgment result is yes, thus effectively avoiding performing the M2M service in the case that a network load is heavy, so that the normal performance of other communication services is not affected when the M2M service is being performed, and service quality of the M2M service is improved accordingly.

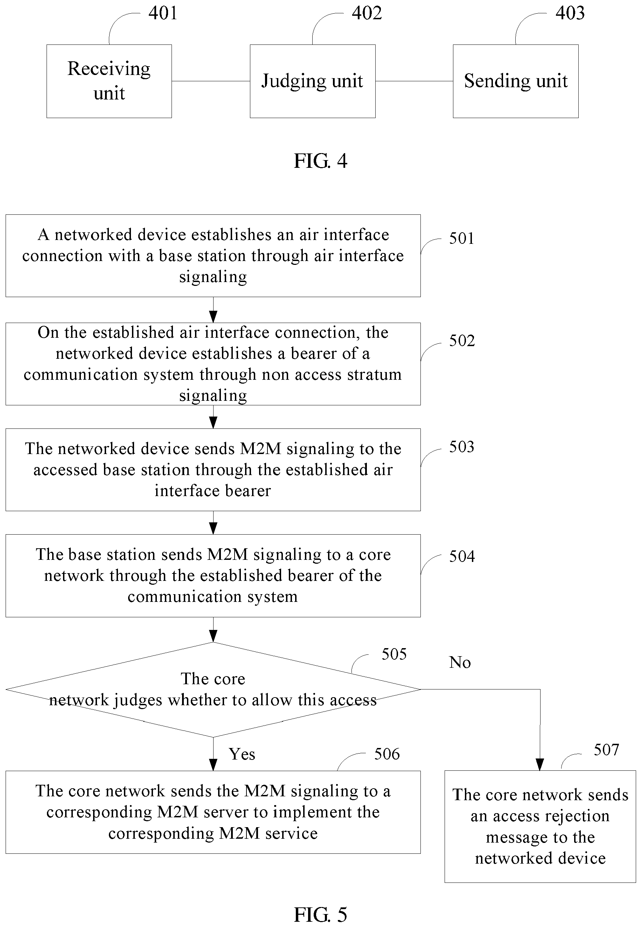

Further, an embodiment of the present invention also provides a connection network for implementing an M2M service, as shown in FIG. 4, where the connection network includes:
a receiving unit 401, configured to receive an M2M service request sent by a source M2M service entity;
a judging unit 402, configured to judge, according to resource scheduling information, whether it is allowed to perform an M2M service indicated by the M2M service request received by the receiving unit 401; and
a sending unit 403, configured to send the M2M service request to a target M2M service entity when the judgment result is yes.

In addition, the sending unit 403 of the connection network may also be configured to send an access rejection message to the source M2M service entity when the judgment result is no.

The judging unit 402 may further specifically include:
a current-network-load-information obtaining subunit, configured to obtain information about a current network load;
a first judging subunit, configured to judge, according to the information about the current network load, whether it is allowed to perform the M2M service indicated by the M2M service request; or
an access-scheduling-policy configuring subunit, configured to pre-configure an access scheduling policy;
a first identification information obtaining subunit, configured to obtain identification information carried in the M2M service request;
a second judging subunit, configured to judge, according to the identification information, whether the M2M service request satisfies an access standard of the access scheduling policy to judge whether it is allowed to perform the M2M service indicated by the M2M service request; or
a subscription information configuring subunit, configured to pre-configure subscription information of the source M2M service entity;
a second identification information obtaining subunit, configured to obtain the identification information carried in the M2M service request; and
a third judging subunit, configured to judge, according to the identification information, whether the M2M service request satisfies an access standard of the subscription information of the source M2M service entity to judge whether it is allowed to perform the M2M service indicated by the M2M service request.

The technical solutions of the present invention are further described with reference to the foregoing method and a specific application scenario. By taking a connection network based on a mobile communication network as an example, before an M2M service is performed, first it is necessary to configure an access scheduling policy which may be configured according to information such as a priority level of the access and a priority level of the M2M service, as a parameter for resource scheduling. After the configuration of the access scheduling policy is completed, the configured policy may be deployed on an entity in the connection network. Here, the entity is referred to as a mobility management entity. In this embodiment, the configured policy is deployed on an entity in a core network, and the core network performs the resource scheduling. In addition, if a networked device also has subscription information in the system, such as frequency information of an uplink request of the networked device (such as a limit on a request interval and a limit on the number of request times), a limit on the number of connections/bearers of a public data network (PDN), and access/service priority, the mobility management entity needs to obtain the subscription information of the networked device from a subscription server of the networked device, as another parameter for resource scheduling. In this embodiment, the networked device initiates an uplink M2M service request first, where a specific implementation process is as shown in FIG. 5:
Step 501: A networked device establishes an air interface connection with a base station through air interface signaling.
Step 502: On the established air interface connection, the networked device establishes a bearer of a communication system through non access stratum signaling.
Step 503: The networked device sends M2M signaling to the accessed base station through the established air interface bearer.
Step 504: The base station sends M2M signaling to a core network through the established bearer of the communication system.
Step 505: The core network judges whether to allow this access.
   In step 505, after receiving this M2M service request, a mobility management entity in the core network judges, according to resource scheduling information, such as information about a current network load, an access scheduling policy, subscription information of the networked device, or another judgment criterion, whether it is allowed to perform an M2M service indicated by the M2M service request. For example, the mobility management entity may judge, with reference to a current load condition of the system, whether the request is larger than a request interval in the subscription information, whether the number of request times is less than the number of times in the subscription information, whether the number of connections/bearers established in an access network is less than the number in the subscription information, whether the priority of the service type is higher, to determine whether it is allowed to perform the M2M service. If the judgment result is yes, step 506 is executed; if the judgment result is no, step 507 is executed.
Step 506: The core network sends the M2M signaling to a corresponding M2M server to implement the corresponding M2M service.
Step 507: The core network sends an access rejection message to the networked device.

In step 507, through judgment, the mobility management entity in the core network determines that it is not allowed to perform the M2M service and then sends an access rejection message to the networked device, where the message may further carry an access rejection reason, and accordingly, time to initiate a next access request may also be carried in the access rejection message according to the subscription information, so that the networked device may initiate the next request with reference to the information.

In addition, when the mobility management entity in the core network determines through judgment that the access is not allowed, the mobility management entity may also not send the access rejection message to the networked device temporarily; instead, the mobility management entity records the current request, and if network conditions allow this access during delay time allowed by an M2M user or a service, subsequent access processes are continued.

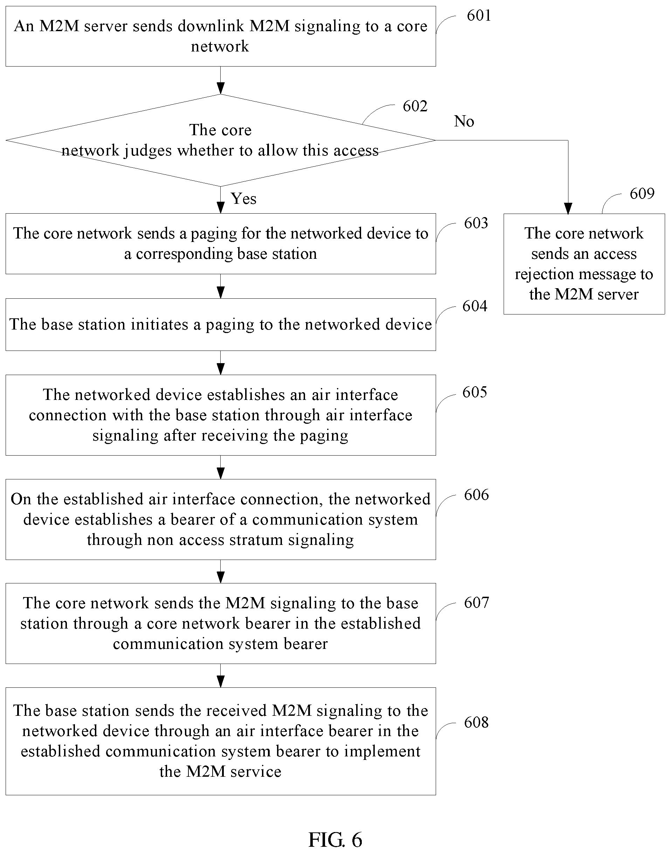

In addition to this manner, the M2M service may also be performed by using the following manner. Again, by taking a connection network based on a mobile communication network as an example, before an M2M service is performed, first it is necessary to configure an access scheduling policy which may be configured according to information such as a priority level of the access and a priority level of the M2M service, as a parameter for resource scheduling. After the configuration of the access scheduling policy is completed, the configured policy may be deployed on an entity in the connection network. Here, the entity is referred to as a mobility management entity. In this embodiment, the configured policy is deployed on an entity in a core network, and the core network performs the resource scheduling. In addition, if the networked device also has subscription information in the system, such as frequency information of downlink signaling received by the networked device (such as a limit on a request interval and a limit on the number of request times), a limit on the number of connections/bearers of a PDN, and access/service priority, the mobility management entity needs to obtain the subscription information of the networked device from a subscription server of the networked device, as another parameter for resource scheduling. In this embodiment, the M2M server sends a downlink M2M service request first, where a specific implementation process is as shown in FIG. 6:
Step 601: An M2M server sends downlink M2M signaling to a core network.
Step 602: The core network judges whether to allow this access.
   In step 602, after receiving this M2M service request, a mobility management entity in the core network judges, according to resource scheduling information, such as information about a current network load, an access scheduling policy, subscription information of the networked device. or another judgment criterion, whether it is allowed to perform an M2M service indicated by the M2M service request. For example, the mobility management entity may judge, with reference to a current load condition of the system, whether the request is larger than a request interval in the subscription information, whether the number of request times is less than the number of times in the subscription information, whether the number of connections/bearers established in an access network is less than the number in the subscription information, whether the priority of the service type is higher, to determine whether it is allowed to perform the M2M service. If the judgment result is yes, step 603 is executed; if the judgment result is no, step 609 is executed.
Step 603: The core network sends a paging for the networked device to a corresponding base station.
   In step 603, the core network sends, according to a target address of the signaling, where the target address of the signaling is carried in the downlink signaling, the signaling to the base station corresponding to the networked device.
Step 604: The base station initiates a paging to the networked device.
   In step 604, the base station initiates, according to the target address information carried in the downlink signaling, a paging to the networked device corresponding to the target address information.
Step 605: The networked device establishes an air interface connection with the base station through air interface signaling after receiving the paging.
Step 606: On the established air interface connection, the networked device establishes a bearer of a communication system through non access stratum signaling.
Step 607: The core network sends the M2M signaling to the base station through a core network bearer in the established communication system bearer.
Step 608: The base station sends the received M2M signaling to the networked device through an air interface bearer in the established communication system bearer to implement the M2M service.
Step 609: The core network sends an access rejection message to the M2M server.

In step 609, through judgment, the mobility management entity in the core network determines that it is not allowed to perform the M2M service and then sends an access rejection message to the M2M server, where the message may also carry an access rejection reason, and accordingly, time to initiate a next access request may also be carried in the access rejection message according to the subscription information, so that the M2M server may initiate the next request with reference to the information.

In addition, when the mobility management entity in the core network determines through judgment that the access is not allowed, the mobility management entity may also not send the access rejection message to the M2M server temporarily; instead, the mobility management entity records the current request, and if network conditions allow this access during delay time allowed by an M2M user or a service, subsequent access processes are continued.

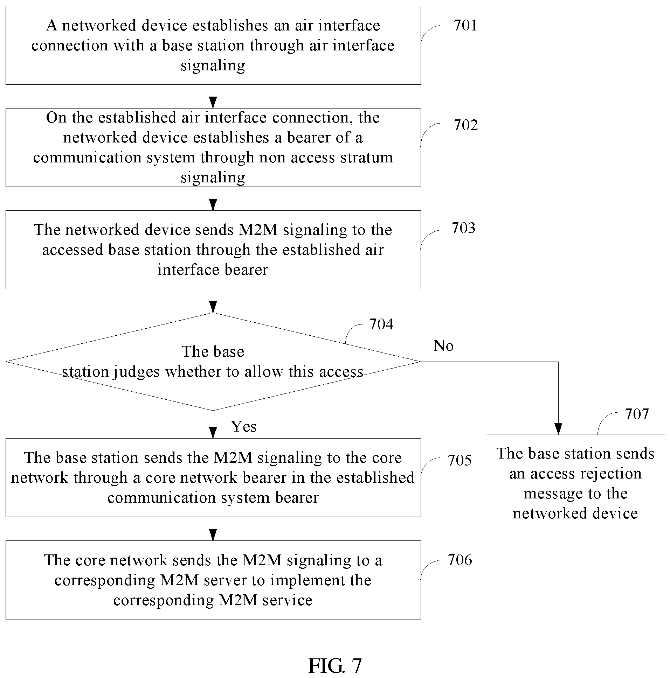

In the foregoing two embodiments, whether to allow the access is judged through the core network, and accordingly, the access judgment may also be performed through the base station. Before the M2M service is performed, first it is necessary to configure an access scheduling policy which may be configured according to information such as a priority level of the access and a priority level of the M2M service, as a parameter for resource scheduling. After the configuration of the access scheduling policy is completed, the configured policy may be deployed on an entity in the connection network. In this embodiment, the configured policy is deployed on the base station. When the configured policy is deployed, the policy may be directly deployed on the base station or may be deployed on an entity in the core network and then sent by the core network to the base station. In addition, if the networked device also has subscription information in the system, such as frequency information of an uplink request of the networked device (such as a limit on a request interval and a limit on the number of request times), a limit on the number of connections/bearers of a PDN, and access/service priority, the base station needs to obtain the subscription information of the networked device from a subscription server of the networked device, as another parameter for resource scheduling. In this embodiment, the networked device initiates an uplink M2M service request first, where a specific implementation process is as shown in FIG. 7:
Step 701: A networked device establishes an air interface connection with a base station through air interface signaling.
Step 702: On the established air interface connection, the networked device establishes a bearer of a communication system through non access stratum signaling.
Step 703: The networked device sends M2M signaling to the accessed base station through the established air interface bearer.
Step 704: The base station judges whether to allow this access.
   In step 704, after receiving this M2M service request, the base station judges, according to resource scheduling information, such as information about a current network load, an access scheduling policy, subscription information of the networked device, or another judgment criterion, whether it is allowed to perform an M2M service indicated by the M2M service request. For example, the base station may judge, with reference to a current load condition of the system, whether the request is larger than a request interval in the subscription information, whether the number of request times is less than the number of times in the subscription information, whether the number of connections/bearers established in an access network is less than the number in the subscription information, whether the priority of the service type is higher, to determine whether it is allowed to perform the M2M service. If the judgment result is yes, step 705 is executed; if the judgment result is no, step 707 is executed.
Step 705: The base station sends the M2M signaling to the core network through a core network bearer in the established communication system bearer.
Step 706: The core network sends the M2M signaling to a corresponding M2M server to implement the corresponding M2M service.
Step 707: The base station sends an access rejection message to the networked device.

In step 707, through judgment, the base station determines that it is not allowed to perform the M2M service and then sends an access rejection message to the networked device, where the message may also carry an access rejection reason, and accordingly, time to initiate a next access request may also be carried in the access rejection message according to the subscription information, so that the networked device may initiate the next request with reference to the information.

In addition, when the base station determines through judgment that the access is not allowed, the base station may also not send the access rejection message to the networked device temporarily; instead, the base station records the current request, and if network conditions allow this access during delay time allowed by an M2M user or a service, subsequent access processes are continued.

It should also be noted that in this document, relational terms such as first and second are used solely to distinguish one entity or operation from another entity or operation without necessarily requiring or implying any such actual relationship or order between these entities or operations. Furthermore, the terms "comprising", "including", or any other variant are intended to cover a non-exclusive inclusion, so that a process, method, article, or device that includes a list of elements not only includes those elements but also includes other elements which are not expressly listed or are inherent to the process, method, article, or device. An element preceded by "includes a ..." does not, without more constraints, preclude the existence of additional identical elements in the process, method, article, or device that includes the element.

Those of ordinary skilled in the art may understand that all or part of steps in the foregoing method embodiments may be implemented by a program instructing relevant hardware. The program may be stored in a computer readable storage medium, and when the program is executed, the steps of the foregoing method embodiments are executed; and the storage medium may be any medium that may store program codes, such as a Read Only Memory (ROM), a Random Access Memory (RAM), a magnetic disk, and a compact disk.

The foregoing description of the disclosed embodiments enables those skilled in the art to implement or use the present invention. Various modifications to these embodiments are readily apparent to those skilled in the art, and the general principles defined here may be applied to other embodiments without departing from the scope of the claims. Thus, the present invention is not intended to be limited to the embodiments shown here.

## Claims

1. A method for implementing a Machine-to-Machine, M2M, service, comprising:
receiving an M2M service request from a source M2M service entity (201), wherein the M2M service request comprises information about an M2M service access mode;
judging whether it is allowed to perform an M2M service indicated by the M2M service request according to resource scheduling information (202), wherein the resource scheduling information comprises different priorities set for different M2M service access modes; and
sending the M2M service request to a target M2M service entity according to target address information carried in the M2M service request, when judging that it is allowed to perform the M2M service indicated by the M2M service request according to the resource scheduling information (203).

2. The method according to claim 1, further comprising:
sending an access rejection message to the source M2M service entity, or recording the M2M service request and allowing the source M2M service entity to resend the M2M service request during a period of time when judging that it is not allowed to perform the M2M service indicated by the M2M service request according to the resource scheduling information.

3. The method according to claim 2, wherein the access rejection message comprises an access rejection reason and/or time for the source M2M service entity to initiate a next M2M service request.

4. A connection network for implementing a Machine-to-Machine, M2M, service, comprising a receiving unit, a judging unit, and a sending unit, wherein:
the receiving unit (401) is configured to receive an M2M service request from a source M2M service entity, wherein the M2M service request comprises information about an M2M service access mode;
the judging unit (402) is configured to judge whether it is allowed to perform an M2M service indicated by the M2M service request according to resource scheduling information,
wherein the resource scheduling information comprises different priorities set for different M2M service access modes; and
the sending unit (403) is configured to send the M2M service request to a target M2M service entity when the judging unit judges that it is allowed to perform the M2M service indicated by the M2M service request according to the resource scheduling information.

5. The connection network according to claim 4, wherein the sending unit is further configured to send an access rejection message to the source M2M service entity when the judging unit judges that it is not allowed to perform the M2M service indicated by the M2M service request according to the resource scheduling information .

6. The connection network according to claim 5, wherein the the access rejection message comprises an access rejection reason and/or time for the source M2M service entity to initiate a next M2M service request.

## Patentansprüche

1. Verfahren zum Implementieren eines Maschine-zu-Maschine-Dienstes bzw. M2M-Dienstes, umfassend:
Empfangen einer M2M-Dienstanforderung von einer Quellen-M2M-Dienstentität (201), wobei die M2M-Dienstanforderung Informationen über einen M2M-Dienstzugriffsmodus umfasst;
Beurteilen gemäß Ressourcenplanungsinformationen, ob es erlaubt ist, einen M2M-Dienst, der durch die M2M-Dienstanforderung angegeben wird, durchzuführen (202), wobei die Ressourcenplanungsinformationen unterschiedliche Prioritäten umfassen, die für unterschiedliche M2M-Dienstzugriffsmodi festgelegt sind; und
Senden der M2M-Dienstanforderung zu einer Ziel-M2M-Dienstentität gemäß Zieladressinformationen, die in der M2M-Dienstanforderung geführt werden, wenn gemäß den Ressourcenplanungsinformationen beurteilt wird, dass es erlaubt ist, den M2M-Dienst, der durch die M2M-Dienstanforderung angegeben wird, durchzuführen (203).

2. Verfahren nach Anspruch 1, ferner umfassend:
Senden einer Zugriffszurückweisungsnachricht zur Quellen-M2M-Dienstentität oder Aufzeichnen der M2M-Dienstanforderung und Erlauben der Quellen-M2M-Dienstentität, die M2M-Dienstanforderung während eines Zeitraums erneut zu senden, wenn gemäß den Ressourcenplanungsinformationen beurteilt wird, dass es nicht erlaubt ist, den M2M-Dienst, der durch die M2M-Dienstanforderung angegeben wird, durchzuführen.

3. Verfahren nach Anspruch 2, wobei die Zugriffszurückweisungsnachricht einen Zugriffszurückweisungsgrund und/oder eine Zeit zum Initiieren einer nächsten M2M-Dienstanforderung durch die Quellen-M2M-Dienstentität umfasst.

4. Verbindungsnetzwerk zum Implementieren eines Maschine-zu-Maschine-Dienstes bzw. M2M-Dienstes, das eine Empfangseinheit, eine Beurteilungseinheit und eine Sendeeinheit umfasst, wobei:
die Empfangseinheit (401) zum Empfangen einer M2M-Dienstanforderung von einer Quellen-M2M-Dienstentität konfiguriert ist, wobei die M2M-Dienstanforderung Informationen über einen M2M-Dienstzugriffsmodus umfasst;
die Beurteilungseinheit (402) zum Beurteilen gemäß Ressourcenplanungsinformationen konfiguriert ist, ob es erlaubt ist, einen M2M-Dienst, der durch die M2M-Dienstanforderung angegeben wird, durchzuführen, wobei die Ressourcenplanungsinformationen unterschiedliche Prioritäten umfassen, die für unterschiedliche M2M-Dienstzugriffsmodi festgelegt sind; und
die Sendeeinheit (403) zum Senden der M2M-Dienstanforderung zu einer Ziel-M2M-Dienstentität konfiguriert ist, wenn die Beurteilungseinheit gemäß den Ressourcenplanungsinformationen beurteilt, dass es erlaubt ist, den M2M-Dienst, der durch die M2M-Dienstanforderung angegeben wird, durchzuführen.

5. Verbindungsnetzwerk nach Anspruch 4, wobei die Sendeeinheit ferner zum Senden einer Zugriffszurückweisungsnachricht zur Quellen-M2M-Dienstentität konfiguriert ist, wenn die Beurteilungseinheit gemäß den Ressourcenplanungsinformationen beurteilt, dass es nicht erlaubt ist, den M2M-Dienst, der durch die M2M-Dienstanforderung angegeben wird, durchzuführen.

6. Verbindungsnetzwerk nach Anspruch 5, wobei die Zugriffszurückweisungsnachricht einen Zugriffszurückweisungsgrund und/oder eine Zeit zum Initiieren einer nächsten M2M-Dienstanforderung durch die Quellen-M2M-Dienstentität umfasst.

## Revendications

1. Procédé de mise en oeuvre d'un service de machine à machine, M2M, comportant les étapes consistant à :
recevoir une demande de service M2M provenant d'une entité de service M2M d'origine (201), la demande de service M2M comportant des informations concernant un mode d'accès au service M2M ;
juger s'il est permis d'effectuer un service M2M indiqué par la demande de service M2M d'après des informations de programmation de ressources (202), les informations de programmation de ressources comportant différentes priorités spécifiées pour différents modes d'accès au service M2M ; et
envoyer la demande de service M2M à une entité de service M2M de destination d'après des informations d'adresse de destination transportées dans la demande de service M2M, lorsqu'il est jugé qu'il est permis d'effectuer le service M2M indiqué par la demande de service M2M d'après les informations de programmation de ressources (203).

2. Procédé selon la revendication 1, comportant en outre les étapes consistant à :
envoyer un message de rejet d'accès à l'entité de service M2M d'origine, ou enregistrer la demande de service M2M et permettre à l'entité de service M2M d'origine de réémettre la demande de service M2M pendant un laps de temps lorsqu'il est jugé qu'il n'est pas permis d'effectuer le service M2M indiqué par la demande de service M2M d'après les informations de programmation de ressources.

3. Procédé selon la revendication 2, le message de rejet d'accès comportant une raison de rejet d'accès et/ou un instant de lancement par l'entité de service M2M d'origine d'une demande suivante de service M2M.

4. Réseau de connexion servant à mettre en oeuvre un service de machine à machine, M2M, comportant une unité de réception, une unité de jugement et une unité d'émission :
l'unité de réception (401) étant configurée pour recevoir une demande de service M2M provenant d'une entité de service M2M d'origine, la demande de service M2M comportant des informations concernant un mode d'accès au service M2M ;
l'unité de jugement (402) étant configurée pour juger s'il est permis d'effectuer un service M2M indiqué par la demande de service M2M d'après des informations de programmation de ressources,
les informations de programmation de ressources comportant différentes priorités spécifiées pour différents modes d'accès au service M2M ; et
l'unité d'émission (403) étant configurée pour envoyer la demande de service M2M à une entité de service M2M de destination lorsque l'unité de jugement juge qu'il est permis d'effectuer le service M2M indiqué par la demande de service M2M d'après les informations de programmation de ressources.

5. Réseau de connexion selon la revendication 4, l'unité d'émission étant en outre configurée pour envoyer un message de rejet d'accès à l'entité de service M2M d'origine lorsque l'unité de jugement juge qu'il n'est pas permis d'effectuer le service M2M indiqué par la demande de service M2M d'après les informations de programmation de ressources.

6. Réseau de connexion selon la revendication 5, le message de rejet d'accès comportant une raison de rejet d'accès et/ou un instant de lancement par l'entité de service M2M d'origine d'une demande suivante de service M2M.
